# DEMANDE DE BREVET EUROPEEN

(11) **EP 0 650 873 A1**
(43) Date de publication de la demande: **03.05.1995**
(21) Numéro de dépôt: 94402394.4
(22) Date de dépôt: 24.10.1994
(51) Int. Cl.: B60R 25/00

(54) **Dispositif pour protéger contre toute utilisation intempestive, par inactivation de l'embrayage, un véhicule ou une machine équipée d'un embrayage**

(30) Priorité: 27.10.1993 FR 9312838
(71) Demandeur: Denoel, Guy, F-44700 Orvault (FR); Flores, René, F-44830 Bouaye (FR)
(72) Inventeur: Denoel, Guy, F-44700 Orvault (FR); Flores, René, F-44830 Bouaye (FR)
(74) Mandataire: Dawidowicz, Armand

(57) **Abrégé**

1. Dispositif pour protéger contre toute utilisation intempestive, par inactivation de l'embrayage, un véhicule ou une machine, contre le vol, du type comprenant des moyens de blocage de l'embrayage en position débrayée constitués d'un pêne (2) cinématiquement solidaire de la fourchette d'embrayage (3) coopérant avec une pièce stationnaire du compartiment moteur, ledit pêne (2) animé d'un mouvement relatif par rapport à la pièce stationnaire du bloc moteur étant susceptible d'être rendu solidaire de cette dernière lors du débrayage par l'organe de verrouillage (1) occupant une position active, de telle sorte que tout retour de la fourchette d'embrayage à la position embrayée est empêché.

## Description

La présente invention concerne un dispositif pour protéger contre tout emploi intempestif tel que le vol, par inactivation de l'embrayage, un véhicule automobile ou toute machine comportant un arbre moteur et un arbre entraîné susceptible d'être accouplés ou désaccouplés entre eux au moyen d'un dispositif d'embrayage.

De nombreux dispositifs anti-vol existent aujourd'hui pour protéger en particulier les véhicules automobiles contre le vol des véhicules. On connaît ainsi des dispositifs antivol disposés au niveau de l'axe de la direction. Ces dispositifs consistent dans l'emploi d'une pièce de sécurité qui permet de couper le circuit d'allumage et verrouiller la direction. Ces dispositifs sont peu efficaces car il est facile de détruire l'anti-vol et de rétablir le circuit pour actionner le démarreur. On connaît également des dispositifs susceptibles d'agir en bloquant l'action du câble d'embrayage. Tel est le cas du dispositif décrit dans le brevet FR-A-2.572.037. Ce dispositif de protection contre le vol est constitué d'un boîtier de commande disposé dans l'habitacle de l'automobile et commandé par l'utilisateur soit au moyen d'une clé de sécurité, soit par un code de chiffres et/ou de lettres programmé, d'un boîtier de sécurité disposé dans le compartiment moteur du véhicule automobile à travers lequel passe le câble d'embrayage, ce câble étant susceptible d'être immobilisé à l'intérieur du boîtier au moyen d'un organe de blocage approprié actionné par le boîtier de commande. Cependant, un tel dispositif présente l'inconvénient d'avoir à modifier le câble d'embrayage en particulier en incorporant une butée sur ce dernier, cette butée coopérant avec un organe de verrouillage disposé à l'intérieur du boîtier de sécurité pour immobiliser le câble d'embrayage dans la position débrayée. En outre, ces dispositifs peuvent être rendus inactifs par sectionnement du câble ou son démontage.

On connaît d'autres dispositifs tels que celui décrit dans le brevet FR-A-923.301 ou dans le brevet US-A-1.972.300 qui sont incorporés au niveau de la pédale d'embrayage et ont pour fonction de bloquer la pédale d'embrayage en position débrayée. Ces dispositifs aisément accessibles résistent généralement peu longtemps à la personne commettant l'infraction.

La présente invention a donc pour objectif de pallier les inconvénients précités en proposant un dispositif pour protéger un véhicule automobile ou une machine autotractée contre le vol ne nécessitant pas le changement complet du câble et de la gaine d'embrayage et assurant une sécurité importante contre le vol.

L'invention concerne à cet effet un dispositif pour protéger, par inactivation de l'embrayage, un véhicule automobile ou une machine autotractée, contre tout emploi intempestif tel que le vol, du type comprenant un boîtier de commande disposé au voisinage de l'utilisateur et actionné par ce dernier au moyen d'une clef de sécurité, d'un code, d'une émission haute-fréquence ou infra-rouge ou tout autre moyen approprié, de manière à envoyer un signal, un organe de verrouillage disposé dans le compartiment moteur et actionné par le signal émis par ledit boîtier de commande pour pouvoir occuper au moins deux positions, l'une neutre dite de déverrouillage, l'autre active dite de verrouillage, dispositif caractérisé en ce qu'il comprend des moyens de blocage de l'embrayage en position débrayée constitués d'un pêne cinématiquement solidaire de la fourchette d'embrayage coopérant avec une pièce stationnaire du bloc moteur, ledit pêne animé d'un mouvement relatif par rapport à la pièce stationnaire du bloc moteur étant susceptible d'être rendu solidaire de cette dernière lors du débrayage par l'organe de verrouillage occupant une position active, de telle sorte que tout retour de la fourchette d'embrayage à la position embrayée est empêché.

Selon une forme de réalisation préférée de l'invention, la pièce stationnaire du bloc moteur est constituée d'un module de sécurité fixé à une pièce du bloc moteur telle que la patte d'appui de la gaine d'embrayage, ledit module présentant un logement formant gâche à l'intérieur duquel pénètre ledit pêne au moins en position débrayée pour y être immobilisé par l'organe de verrouillage disposé dans ou au voisinage du module de sécurité lorsque cet organe de verrouillage est en position active.

D'autres caractéristiques et avantages de l'invention apparaîtront encore à la lecture de la description qui suit et des dessins joints, fournis uniquement à titre d'exemples, dans lesquels :
les figures 1 à 3 constituent des représentations schématiques de la liaison et du positionnement de la pièce stationnaire incorporant l'organe de verrouillage du compartiment moteur par rapport au pêne monté solidaire de la fourchette d'embrayage;
la figure 4 représente une vue agrandie de la figure 1 dans laquelle est également détaillé l'actionnement de l'organe de verrouillage;
la figure 5 représente un autre mode de réalisation du verrouillage du pêne au moyen de l'organe de verrouillage dans ladite pièce stationnaire;
la figure 6 représente le mode de la réalisation de la figure 5 en position neutre de l'organe de verrouillage;
les figures 7 et 7A représentent des vues schématiques en coupe transversale d'un autre mode de réalisation de l'organe de verrouillage constitué par un levier à deux bras;
la figure 8 représente une vue en coupe de la liaison organe de verrouillage-pêne dans la pièce stationnaire, l'organe de verrouillage étant constitué par une plaque translatable; et
les figures 9 et 10 représentent un autre mode de réalisation de la liaison organe de verrouillage-pêne-pièce stationnaire, l'organe de verrouillage étant constitué par une plaque pivotable occupant une position active ou verrouillée dans la figure 9 et une position neutre ou déverrouillée dans la figure 10.

Conformément à l'invention, le dispositif pour protéger, en particulier contre les vols, un véhicule ou une machine par inactivation de l'embrayage s'applique à tout véhicule ou machine comprenant un arbre moteur, un arbre entraîné, l'arbre entraîné étant susceptible d'être accouplé ou désaccouplé de l'arbre moteur au moyen d'un dispositif d'embrayage. Cet embrayage comprend au moins une fourchette d'embrayage 3 déplacée au moyen d'un câble 7 ou d'un vérin hydraulique relié à la pédale d'embrayage ou à un levier de commande d'embrayage, cette fourchette agissant sur le dispositif d'embrayage pour assurer la liaison entre l'arbre entraîné et l'arbre moteur et permettant la transmission, en particulier à des roues motrices du mouvement de l'arbre moteur. Le principe anti-vol repose sur le blocage de l'embrayage, en particulier de la fourchette d'embrayage 3 en position débrayée. Généralement, le câble d'embrayage 7 est disposé à l'intérieur d'une gaine de guidage 11 qui est elle-même maintenue en position au moyen d'une patte, dite patte d'appui de la gaine d'embrayage, représentée en 6. La fourchette d'embrayage, représentée en 3, est susceptible, sous l'effet d'une traction du câble d'embrayage 7, d'occuper une position embrayée, représentée par la flèche E dans toutes les figures, et une position débrayée représentée par la flèche D dans toutes les figures. L'ensemble de ces éléments est bien évidemment disposé à l'intérieur du compartiment moteur du véhicule. Le passage de la fourchette d'embrayage de la position embrayée à la position débrayée et inversement est commandé par la pédale d'embrayage (non représentée dans la figure) ou par un organe de commande tel qu'un levier ou un vérin approprié.

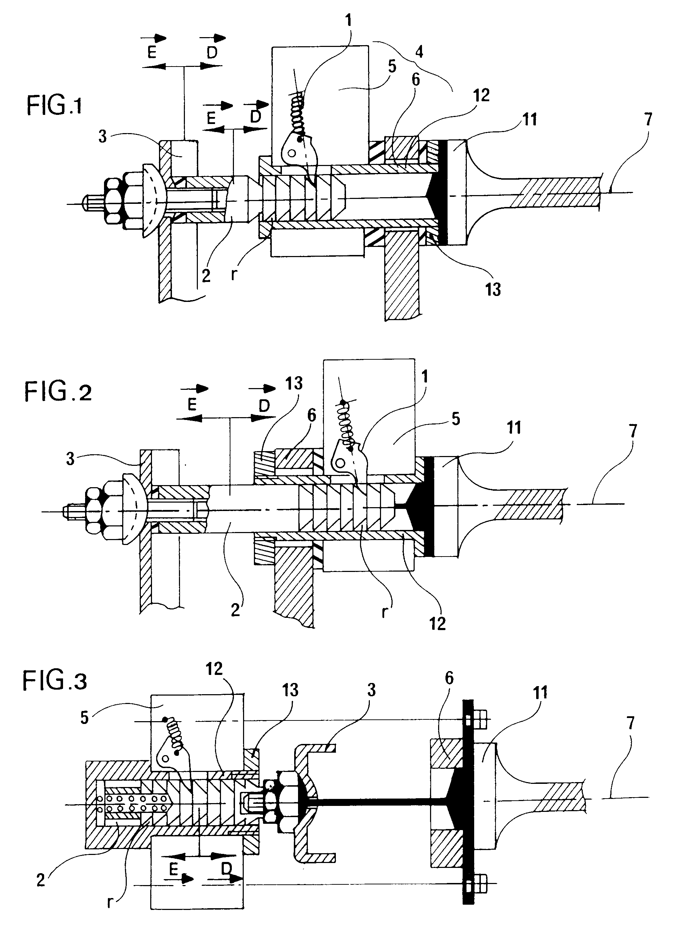

Le dispositif de protection contre les vols, objet de l'invention, comporte donc un dispositif d'embrayage, tel que décrit ci-dessus, un boîtier de commande disposé dans l'habitacle du véhicule lorsqu'il s'agit d'un véhicule automobile ou au voisinage de l'utilisateur à portée de ce dernier lorsqu'il s'agit d'une machine, de manière à pouvoir être actionné par ce dernier. L'actionnement de ce boîtier de commande permet d'adresser un signal à l'un des éléments disposé dans le compartiment moteur pour permettre l'actionnement de l'organe de verrouillage 1 qui sera décrit ci-après, en particulier son passage d'une position neutre dite de déverrouillage à une position active dite de verrouillage et inversement. Ce boîtier de commande, qui peut avoir une forme quelconque et être en particulier constitué par un clavier, une cellule, un émetteur, un détecteur, un boîtier ou tout autre moyen approprié, peut être actionné au moyen d'une clé de sécurité, d'un code à chiffres ou à lettres programmé, d'une émission haute fréquence ou infra-rouge ou par tout autre moyen, l'actionnement de ce boîtier ayant pour objectif d'envoyer un signal à un micro-processeur disposé à l'intérieur du compartiment et de préférence à l'intérieur du module de sécurité. Ce dispositif comporte, outre le boîtier de commande, le dispositif d'embrayage proprement dit et un organe de verrouillage 1 disposé dans le compartiment moteur, une pièce stationnaire 4 du bloc moteur qui coopérera avec l'organe de verrouillage 1 pour immobiliser la fourchette d'embrayage 3 en position débrayée. Cette pièce stationnaire du bloc moteur peut également affecter un grand nombre de formes. Cette pièce stationnaire est, dans tous les exemples représentés, constituée par un module appelé par la suite boîtier dit de sécurité 5 monté solidaire de la patte d'appui 6 de la gaine d'embrayage 11 mentionnée ci-dessus. La patte d'appui de la gaine de guidage d'embrayage a été retenue comme support de fixation du boîtier de sécurité 5 en raison de sa proximité avec la fourchette d'embrayage 3. Bien évidemment, tout autre élément existant monté fixe dans le compartiment moteur aurait pu être retenu comme support de fixation du boîtier de sécurité 5. De même, ce boîtier de sécurité 5 peut être de forme quelconque et peut également être positionné de manière quelconque comme le montrent les figures 1 à 3. En effet, dans ces figures, le boîtier de sécurité 5 est successivement positionné entre la fourchette d'embrayage 3 et la patte d'appui 6 de la gaine de guidage du câble d'embrayage 7, entre la patte d'appui 6 de la gaine de guidage et la gaine de guidage 11 du câble d'embrayage elle-même ou du côté de la fourchette d'embrayage 3 liée à la pédale d'embrayage en série avec la fourchette d'embrayage 3, la patte d'appui 6 et la gaine de guidage 11 du câble d'embrayage dans l'ordre précité. Ces trois figures démontrent que le positionnement du boîtier de sécurité 5 n'est aucunement déterminant pour le fonctionnement de l'ensemble du dispositif. Pour des raisons pratiques, l'organe de verrouillage 1 est de préférence positionné à l'intérieur de ce boîtier de sécurité 5. Ce boîtier de sécurité 5 renferme en outre un microprocesseur susceptible de recevoir le signal provenant du boîtier de commande et de traiter ce signal de manière à agir sur les organes d'actionnement décrits ci-après de l'organe de verrouillage 1 pour faire passer ce dernier d'une position neutre à une position active et inversement.

La fourchette d'embrayage 3 est quant à elle montée cinématiquement solidaire d'un pêne 2, dont les caractéristiques seront décrites ci-après, ce pêne 2 étant susceptible d'être animé d'un mouvement relatif par rapport au boîtier de sécurité 5 pour, notamment en position débrayée de la fourchette d'embrayage, être rendu solidaire de ce dernier au moyen de l'organe de verrouillage 1.

Dans l'exemple représenté aux figures 1 à 4, le pêne de verrouillage 2 est constitué par un axe monté cinématiquement solidaire de la fourchette d'embrayage 3, ce pêne 2 disposé coaxial au câble d'embrayage 7 et traversé par ce dernier étant susceptible d'être déplacé à coulissement à l'intérieur du boîtier de sécurité 5. Il est à noter que ce positionnement du pêne sur le câble n'est aucunement obligatoire, les deux éléments étant parfaitement indépendants. Ce positionnement est choisi uniquement en raison de son faible encombrement.

A titre d'exemple de réalisation, il est décrit ci-après la fixation du boîtier de sécurité 5 sur la patte d'appui 6 de la gaine de guidage du câble d'embrayage ainsi que la liaison entre la fourchette d'embrayage 3 et le pêne de verrouillage 2. Ainsi, comme le montrent les figures 1 à 3, le boîtier de sécurité 5 est monté solidaire du bloc moteur du véhicule, en particulier de la patte d'appui 6 de la gaine de guidage du câble d'embrayage, au moyen d'une douille 12 traversant ledit boîtier de sécurité 5, cette douille étant liée à la patte d'appui 6 de la gaine de guidage du câble d'embrayage au moyen d'un écrou 13 verrouillé à ladite douille 12 au moyen d'un ergot borgne 14. Pour permettre un serrage modéré de l'écrou 13 sur la patte d'appui de la gaine de guidage du câble d'embrayage 6, il est intercalé de part et d'autre de la patte d'appui entre d'une part le boîtier 5, d'autre part, l'écrou 13 des blocs de caoutchouc 15 rendant la liaison semi-élastique. Le pêne 2 est quant à lui solidaire de la fourchette de commande de débrayage 3 au moyen d'une liaison à rotule réalisée par un écrou spécifique 16 traversant la fourchette 3 et pénétrant à l'intérieur dudit pêne constitué par un axe creux de manière à être immobilisé sur ce dernier soit, par exemple, au moyen d'un ergot borgne 17, soit, dans le cas où le pêne de verrouillage est fileté, par vissage de l'écrou 16 à l'intérieur dudit pêne. Bien évidemment, tout autre mode de réalisation pour rendre cinématiquement solidaire le pêne 2 et la fourchette 3 peut être envisagé. De ce fait, lors d'une action sur la pédale d'embrayage, on rapproche la fourchette d'embrayage 3 de la patte d'appui 6 de la gaine de guidage du câble d'embrayage, entraînant ainsi le pêne 2 à l'intérieur du boîtier de sécurité 5 par coulissement du pêne 2 à l'intérieur de la douille 12 montée solidaire du boîtier de sécurité 5. Ce pêne de verrouillage 2 pourra alors être immobilisé à l'intérieur du boîtier de sécurité 5 au moyen de l'organe de verrouillage 1 lorsque ce dernier occupe une position active. Les organes d'actionnement de cet organe de verrouillage 1 sont généralement également intégrés dans le boîtier de sécurité 5.

Comme le montre la description des figures 1 à 8, un grand nombre de réalisations peut être envisagé à la fois pour l'organe de verrouillage et pour les organes d'actionnement de cet organe de verrouillage. La réalisation de cet organe de verrouillage 1 doit être telle qu'il soit susceptible d'occuper au moins deux positions, l'une dite neutre dans laquelle il permet un libre coulissement du pêne de verrouillage à l'intérieur du boîtier de sécurité 5 et plus particulièrement dans la douille 12, l'autre active ou de verrouillage dans laquelle il rend solidaire le pêne de verrouillage 2 du boîtier de sécurité 5 en le laissant librement pénétrer dans le boîtier puis en empêchant ce dernier de sortir du boîtier de sécurité 5 et empêchant donc de ce fait le retour de la fourchette d'embrayage à la position embrayée.

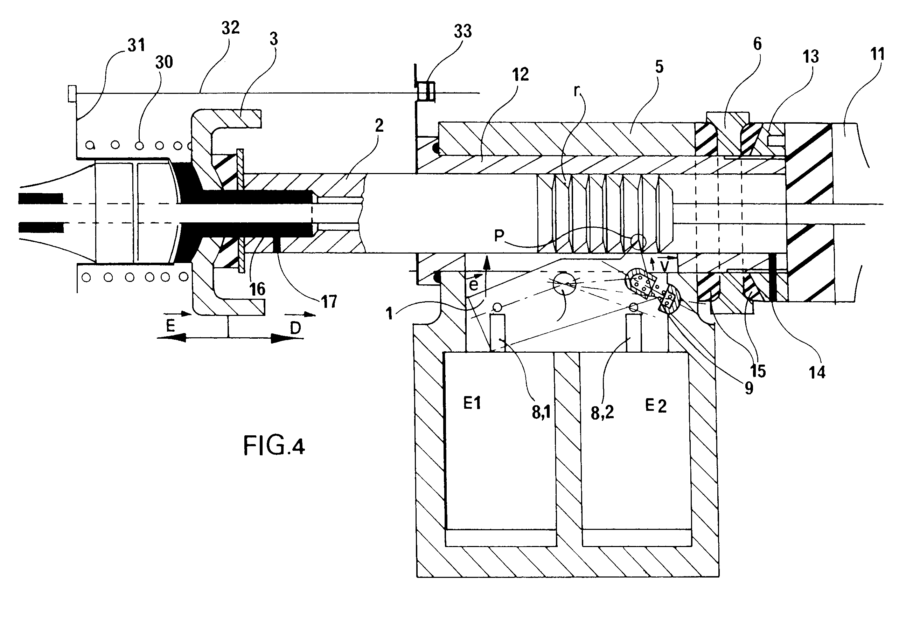

Conformément à la figure 4, l'organe de verrouillage 1 formant cliquet peut constituer une bascule pivotante autour d'un axe 18 sous l'action de deux électro-aimants E1 et E2. Le pivotement de cet organe de verrouillage 1 autour de son axe 18 est obtenu par actionnement de l'un ou l'autre des électro-aimants. Ainsi, dans l'exemple représenté à la figure 4, lorsque l'électro-aimant E1 est alimenté sous l'impulsion du boîtier de commande, le noyau mobile 8-1 dudit électro-aimant vient agir sur l'organe de verrouillage 1 de manière à le déplacer dans le sens représenté à la figure 1, de telle sorte qu'au cours de son basculement, l'organe de verrouillage est complètement désencliqueté du pêne 2. Dans ce cas, on dit que l'organe de verrouillage occupe une position neutre. A l'inverse, lorsqu'on veut faire basculer l'organe de verrouillage 1 dans une position active ou de verrouillage, on commande la sortie du noyau mobile 8-2 de l'électro-aimant E2 de manière à faire basculer l'organe de verrouillage 1 dans le sens de la flèche v. Cet organe de verrouillage pourra être maintenu dans une position active ou neutre grâce au moyen de rappel 9 tel qu'un ressort de compression. Dans cette position active, lorsque la pédale d'embrayage est enfoncée, le pêne 2 cinématiquement solidaire de la fourchette d'embrayage 3 pénètre à l'intérieur de la douille 12, de telle sorte que le cliquet 1 terminé à son extrémité par une dent de rochet vient pénétrer à l'intérieur de rainures r ou de crans portés par le pêne de verrouillage 2. De ce fait, il est possible de débrayer jusqu'à la position extrême, le cliquet passant d'un cran à un autre ; par contre, il sera impossible d'embrayer, interdisant de ce fait la transmission du couple aux roues motrices.

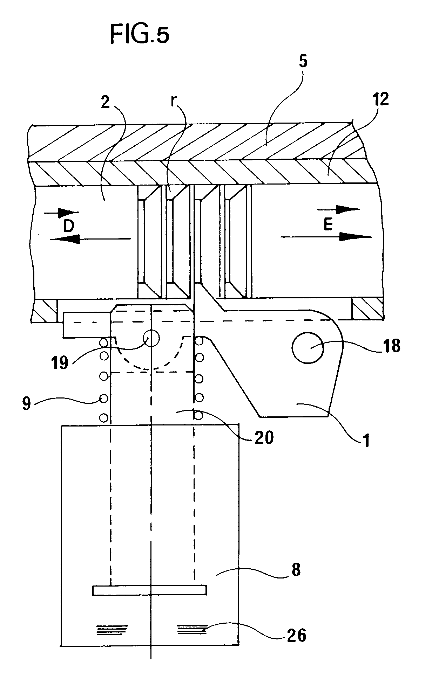

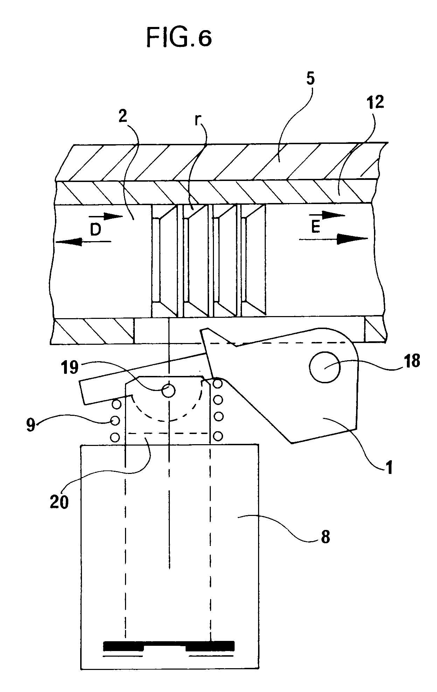

Il est possible également, dans un autre mode de réalisation de l'invention conforme aux figures 5 et 6, d'actionner l'organe de verrouillage 1 pour permettre son passage de la position neutre à la position active et inversement au moyen d'un seul électro-aimant 8 polarisé disposant d'un noyau couplé à un aimant permanent intégré permettant d'obtenir une position rentrée stable du noyau 20.

Dans ce cas, comme le montrent les figures 5 et 6, l'organe de verrouillage se présente toujours sous forme d'un cliquet articulé autour d'un axe 18 de manière à pouvoir occuper au moins deux positions. Ce cliquet est monté solidaire, au moyen de l'axe 19, du noyau 20 de l'électroaimant 8. Ce noyau 20 est susceptible d'occuper une position rentrée ou une position sortie. Ce noyau 20 est couplé à un aimant permanent 26 qui maintient le noyau en position rentrée correspondant à la position déverrouillée comme le montre la figure 6. A l'inverse, dans la figure 5, sous l'action du bloc de commande qui envoie un signal, l'électro-aimant 8 est alimenté, entraînant le décollement du noyau 20 et de l'aimant permanent 26 et la sortie du noyau 20 sous l'action d'un ressort 9 disposé autour dudit noyau. Dans cette position active, le cliquet 1 est amené en contact avec le pêne de verrouillage 2 et, en particulier, une saillie du cliquet 20 pénètre à l'intérieur d'une rainure ménagée à la périphérie du pêne de verrouillage 2. On obtient ainsi une immobilisation du pêne de verrouillage 2 au moins dans un sens à l'intérieur ou par rapport au boîtier de sécurité 5. A l'inverse, une nouvelle action sur le bloc de commande entraînera une rentrée du noyau 20 immobilisé au moyen de l'aimant permanent intégré, permettant ainsi le désencliquetage du cliquet de l'organe de verrouillage 1 du pêne 2 et donc permettant le libre embrayage de la fourchette.

En conclusion, la figure 5 correspond à l'organe de verrouillage 1 en position active ou verrouillée et la figure 6 à l'organe de verrouillage en position déverrouillée.

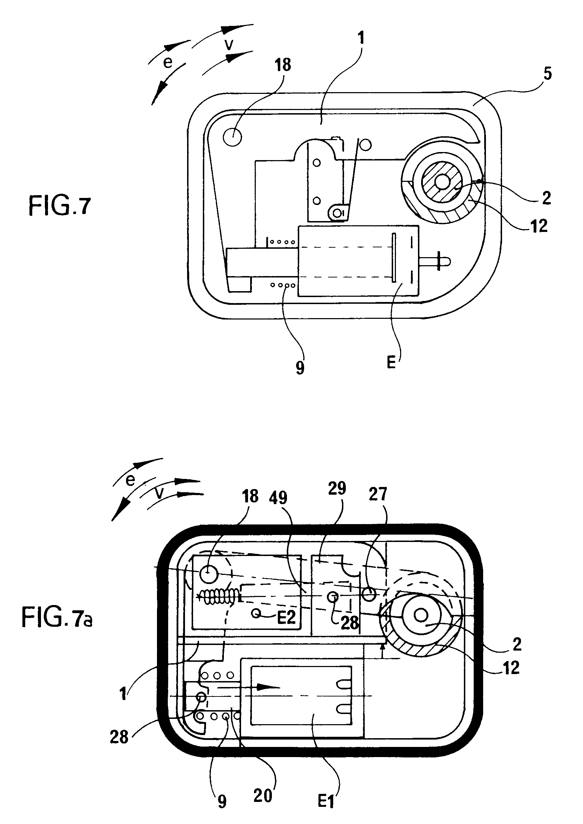

Les figures 7 et 7A représentent une nouvelle variante de cet organe de verrouillage 1 qui, dans ce cas, affecte la forme d'un levier à deux bras pivotant autour d'un axe 18, les branches du levier, disposées sensiblement orthogonales, affectant une forme générale d'équerre, l'une des branches du levier étant actionnée au moyen d'un électro-aimant E polarisé comportant un aimant permanent intégré complété par l'action d'un moyen de rappel tel qu'un ressort 9 de manière analogue à ce qui a été décrit ci-dessus, l'autre branche de cet organe de verrouillage 1 de forme hémicirculaire à son extrémité, coopérant avec un évidement ménagé à la surface du pêne de verrouillage 2 de manière à permettre, lors du passage à la position active de cet organe de verrouillage, une immobilisation du pêne de verrouillage de manière analogue à ce qui a été décrit ci-dessus.

Dans le cas de la figure 7A, l'organe de verrouillage 1 est, de manière analogue à la figure 7, constitué par un levier à deux bras pivotant autour de l'axe 18. Ce levier est actionné au moyen de deux électro-aimants. Le premier électro-aimant E1, dont le noyau 20 est entouré d'un ressort de compression 9, agit par une liaison 28 sur l'une des branches du levier lorsqu'il n'est pas excité par l'intermédiaire du ressort de telle sorte que le levier bascule selon v et passe en position verrouillée. A l'inverse, une excitation de E1 entraînera un basculement du levier dans le sens et son déverrouillage. Pour parfaire la sécurité de l'ensemble, il est prévu un second électro-aimant E2 qui permet le blocage en position déverrouillée du levier grâce à un second verrou 29 qui coopère avec une butée 27 solidaire du levier de manière à immobiliser le levier. Pour débloquer ce levier, il suffira d'exciter E2 pour désengager la butée 27 de son logement dans le verrou 29 solidaire du noyau de E2 grâce à une goupille 28.

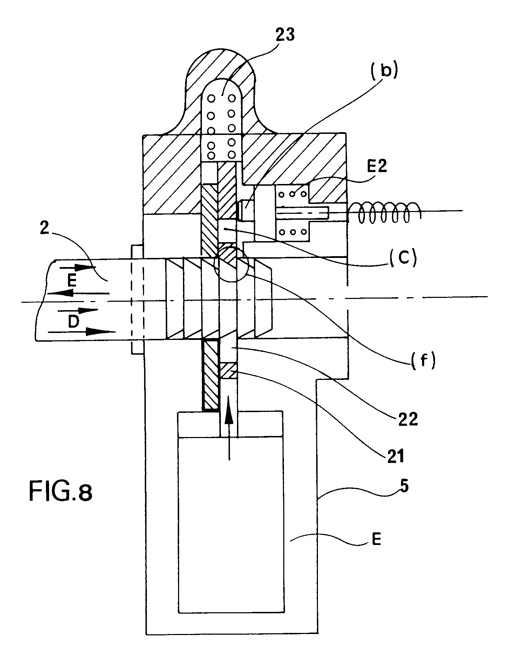

Les figures 8 à 10 diffèrent des exemples précédents par le fait que l'organe de verrouillage 1 est constitué non plus par un levier formant cliquet à un bras ou à deux bras monté à pivotement autour d'un axe de manière à occuper au moins deux positions, mais par une plaque mobile 21 susceptible d'occuper au moins deux positions.

Dans le cas de la figure 8, cette plaque mobile 21 comporte un perçage traversant 22 à l'intérieur duquel coulisse librement, en position neutre de la plaque mobile, le pêne de verrouillage 2 encore constitué par un axe rainuré ou cranté ou muni d'une gorge ou de tout autre moyen similaire. Ce perçage traversant 22 de la plaque mobile 21 est délimité par une paroi biseautée de telle sorte que, lors d'une translation de cette plaque commandée par un ressort 23, le pourtour du perçage traversant 22, et en particulier le biseau, pénètre à l'intérieur d'un cran du pêne de verrouillage 2 pour immobiliser ce dernier. Bien évidemment, si le pêne de verrouillage continue à pénétrer à l'intérieur de son perçage, la plaque passant au niveau de la périphérie du perçage d'un cran à un autre empêche tout retour du pêne de verrouillage 2 à la position embrayée et donc, de ce fait, tout retour de la fourchette d'embrayage à la position embrayée. Par un actionnement de l'électro-aimant E d'action contraire au ressort 23, on ramène la plaque, par une translation de cette dernière, dans une position où de nouveau le pêne de verrouillage 2 peut librement coulisser à l'intérieur du perçage traversant 22 ménagé dans ladite plaque. En position neutre, pour des raisons de sécurité, on utilisera un second électro-aimant E2 dont le noyau mobile pénétrera à l'intérieur d'un deuxième perçage ménagé dans ladite plaque de manière à immobiliser cette dernière. Cet électro-aimant pourra être remplacé par un ressort qui agira sur un tenon venant, lorsque la plaque occupe une position neutre, pénétrer à l'intérieur d'un perçage supplémentaire de ladite plaque, la libération de cet organe de verrouillage s'effectuant au moyen d'un nouvel organe de commande.

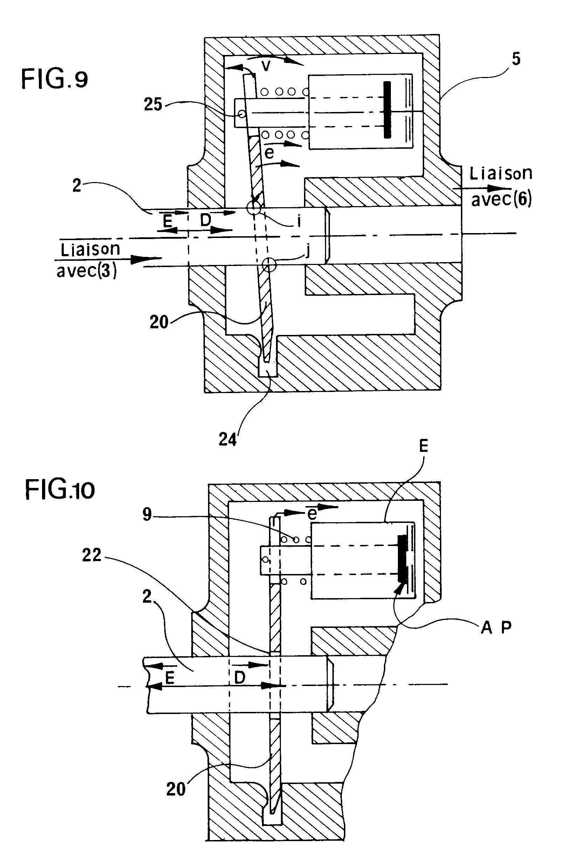

Dans les figures 9 et 10, la plaque mobile translatable 20 est remplacée par une plaque mobile pivotable également représentée en 20, ladite plaque étant montée à pivotement dans une encoche 24 ménagée dans des l'une des parois du boîtier de sécurité 5. Dans ce cas, le pêne de verrouillage est un axe lisse et la plaque mobile comporte un perçage traversant 22 à l'intérieur duquel le pêne de verrouillage 2 coulisse librement avec jeu. Ce pêne de verrouillage est réalisé en un matériau d'une dureté supérieure à celle du matériau utilisé pour la réalisation de la plaque de verrouillage. Cette plaque est animée d'un mouvement de pivotement par rapport audit axe formant pêne au moyen d'un ressort 9 disposé autour du noyau 20 de l'électro-aimant E polarisé incorporant un aimant permanent qui est maintenu dans cette position rentrée par un aimant permanent 26 de manière analogue à ce qui a été décrit ci-dessus. Il est à noter que le noyau 20 ramène la plaque en position neutre grâce à une goupille 25 solidaire dudit noyau qui vient en appui sur l'une des faces de ladite plaque et est ramenée orthogonale audit axe toujours par la rentrée du noyau 20. Lorsque la plaque 20 est pivotée, elle vient en appui sur l'axe formant pêne 2 en au moins deux points représentés en i et j dans la figure 9. Ce pivotement de la plaque entraîne un effet d'arc-boutement de la plaque sur le pêne, empêchant toute translation au moins dans un sens de ce dernier. Ainsi, comme le montre la figure 9, en position pivotée de la plaque, l'axe ou pêne de verrouillage 2 peut se déplacer librement dans le sens D mais tout déplacement dans le sens E correspondant à la position embrayée est empêché.

Il doit être également précisé que dans le cas où le véhicule est équipé d'un dispositif de réglage automatique du jeu sur la commande d'embrayage, il risque de se produire, après déverrouillage de l'embrayage en position débrayée, un mou dans le câble qui sera récupéré par l'action du ressort 30 sur la pièce emboutie 31 jusqu'à ce que la pédale remonte à la position normale. Lorsque le dispositif antivol n'est pas armé, un tirant 32 ajusté par des écrous 33 neutralise l'action du ressort 30 permettant ainsi au dispositif de réglage automatique d'origine de jouer parfaitement son rôle.

Bien évidemment, d'autres modes de réalisation pourront être encore décrits. L'invention ne se limite donc pas aux formes de réalisation décrites ci-dessus mais englobe au contraire un grand nombre de variantes restant dans le cadre de l'invention.

## Revendications

1. Dispositif pour protéger contre toute utilisation intempestive, par inactivation de l'embrayage, un véhicule ou une machine, contre le vol, du type comprenant un boîtier de commande disposé au voisinage de l'utilisateur et actionné par ce dernier au moyen d'une clef de sécurité, d'un code, d'une émission haute-fréquence ou infra-rouge ou de tout autre moyen approprié, de manière à envoyer un signal, un organe de verrouillage (1) disposé dans le compartiment moteur et actionné par le signal émis par ledit boîtier de commande pour pouvoir occuper au moins deux positions, l'une neutre dite de déverrouillage, l'autre active dite de verrouillage, dispositif
caractérisé en ce qu'il comprend des moyens de blocage de l'embrayage en position débrayée constitués d'un pêne (2) cinématiquement solidaire de la fourchette d'embrayage (3) coopérant avec une pièce stationnaire du compartiment moteur, ledit pêne (2) animé d'un mouvement relatif par rapport à la pièce stationnaire du bloc moteur étant susceptible d'être rendu solidaire de cette dernière lors du débrayage par l'organe de verrouillage (1) occupant une position active, de telle sorte que tout retour de la fourchette d'embrayage à la position embrayée est empêché.

2. Dispositif selon la revendication 1,
caractérisé en ce que la pièce stationnaire du bloc moteur est constituée d'un boîtier de sécurité (5) fixé à une pièce du bloc moteur telle que la patte d'appui (6) de la gaine d'embrayage, ledit boîtier (5) présentant un logement formant gâche à l'intérieur duquel ledit pêne (2) pénètre au moins en position débrayée pour y être immobilisé par l'organe de verrouillage (1) disposé dans ou au voisinage du boîtier (5) lorsque l'organe de verrouillage (1) est en position active.

3. Dispositif selon la revendication 2,
caractérisé en ce que le boîtier de sécurité (5) renferme un microprocesseur traitant le signal provenant du boîtier de commande de manière à agir sur les organes d'actionnement (8, 9) de l'organe de verrouillage (1) pour faire passer ce dernier d'une position neutre à une position active et inversement.

4. Dispositif selon l'une des revendications 1 à 3,
caractérisé en ce que les organes d'actionnement de l'organe de verrouillage sont constitués par des moyens mécaniques tels que des moyens élastiques de rappel et/ou des moyens électromagnétiques tels que des électro-aimants.

5. Dispositif selon l'une des revendications 1 à 4,
caractérisé en ce que l'organe de verrouillage (1), articulé de manière à pouvoir occuper au moins deux positions, constitue un cliquet qui coopère avec le pêne (2) cinématiquement solidaire de la fourchette (3) lors du débrayage en pénétrant à l'intérieur d'un cran, d'une rainure, d'une gorge ou de tout autre élément similaire disposé sur ledit pêne (2) de manière à immobiliser le pêne (2) au moins dans un sens en position débrayée de la fourchette (3).

6. Dispositif selon l'une des revendications 1 à 4,
caractérisé en ce que l'organe de verrouillage formant cliquet est un levier terminé à son extrémité par une dent affectant la forme d'une dent de rochet.

7. Dispositif selon l'une des revendications 1 à 4,
caractérisé en ce que l'organe de verrouillage formant cliquet est une plaque mobile (21) comportant un perçage traversant (22) à l'intérieur duquel pénètre axialement le pêne (2) au moins en position débrayée, cette plaque (21) comportant au niveau du pourtour du perçage (22) au moins une saillie qui pénètre dans au moins un évidement du pêne lorsque la plaque est déplacée jusqu'à sa position active.

8. Dispositif selon l'une des revendications 1 à 4,
caractérisé en ce que l'organe de verrouillage formant cliquet est une plaque mobile (21) comportant un perçage traversant (22) à l'intérieur duquel le pêne pénètre axialement avec jeu au moins en position débrayée, ladite plaque, réalisée en un matériau de dureté inférieure à celle du matériau constitutif du pêne, étant susceptible de pivoter de telle sorte qu'elle s'arc-boute sur le pêne (2) constitué par un axe lisse, empêchant toute translation au moins dans un sens de ce dernier.
